# EUROPEAN PATENT APPLICATION

(11) **EP 3 623 190 A1**
(43) Date of publication of application: **18.03.2020**
(21) Application number: 19196330.5
(22) Date of filing: 10.09.2019
(51) Int. Cl.: B60J 7/08

(54) **A VEHICLE MOUNTED COVERING SYSTEM WITH DETACHABLE COVER**

(30) Priority: 13.09.2018 GB 201814889
(71) Applicant: Eclats Holding Limited, Aylesford, Kent ME20 7XE (GB)
(72) Inventor: Hines, Steven, Aylesford, Kent ME20 7XE (GB)
(74) Representative: Fry, David John

(57) **Abstract**

A covering system for a container (14) transported on a vehicle. The system comprises a frame (2) mounted on the vehicle body (4), the distal end of the frame including a spool (6) having a sheet section retractable around and/or extendible from the spool. The sheet section has at its distal end means to attach a cover sheet (12) for deployment over a container (14) located on the vehicle body (4). The cover sheet is detachable from the sheet section once the cover sheet is deployed over the container (14) for securement to the container (14) to allow the container (14) to be removed from the vehicle whilst covered.

## Description

### Field of the Invention

This invention relates to a vehicle mounted covering system with a detachable cover. The system is particularly, though not exclusively, for covering any type of open container, transportable on a vehicle.

### Background of the Invention

There is a need for loads which are held within containers transported on vehicles to be covered to avoid spillage and/or protect the load from adverse weather. For this purpose, various types of container covering systems are known. Such systems generally employ a sheet-like tarpaulin or cover, which is wound onto a roller provided at one end of the container or truck body and a deployment mechanism separate from the container or truck body which, when operated, causes the tarpaulin or cover to unwind and travel over the container or truck body.

The systems are vehicle mounted and retain the tarpaulin in place over the container whilst the container is on the vehicle for transportation. Once transported to its desired location, the tarpaulin is removed from the container by operation of the vehicle-based covering system after which the container is lifted off the vehicle. If the container requires a cover in its stored location a separate ground-based system is employed to cover the container, or the cover is applied and later removed manually.

The present invention seeks to alleviate the need for separate vehicle-based and ground-based covering systems by providing a vehicle mounted system that provides a cover for a container located on a vehicle whereby the cover, once deployed over the container, is detachable from the system to remain on the container to securely cover it when the container is removed from the vehicle for storage.

### Statement of the Inventions

In one aspect there is provided a covering system for a container transported on a vehicle, the system comprising a frame mounted on the vehicle, the distal end of the frame including a rotatable spool having a sheet section retractable around and/or extendible from the spool, the sheet section including at its distal end means to attach a cover sheet for deployment over a container located on the vehicle body, wherein the cover is detachable from the sheet section once the cover is deployed over the container for securement to the container to allow the container to be removed from the vehicle whilst covered.

Preferably the cover sheet is connectable to the sheet section through one or more clips.

Preferably the frame is telescopic.

Preferably the frame carries two vertically aligned rotatable spool.

Preferably one spool has a permanently connected cover sheet connected thereto for deployment over a container located on the vehicle body, when selected to do so by the user.

Preferably the or each cover sheet is made from tarpaulin.

Preferably the sheet section is also made from tarpaulin.

In a second aspect there is provided a method of covering a container on a vehicle and subsequently removing the covered container from the vehicle, wherein the cover is connected to a sheet section carried on a rotatable spool located on a frame upstanding from the vehicle body, the method comprising the steps of:
extending the cover over and across the uncovered container;
securing the distal end of the cover to the corresponding end of the container;
disconnecting the other end of the cover from the sheet section;
securing the end of the cover to the corresponding end of the container; and
removing the covered container from the vehicle.

The system provides a single operation for containers, whether or not the intention is for the container to be removed from the vehicle, which currently requires two separate operating systems.

Further the design and compactness of the installation (the footprint only being the diameter of the frame) allows the system to be fitted on a vehicle within the limitations of current design length restrictions of trucks and trailers.

### Brief Description of the Drawings

The invention will now be described, by way of example, with reference to the accompanying drawings, in which:
Figures 1(A) to (E) illustrate the steps of a covering system constructed in accordance with the invention whereby the container covered remains on the vehicle for transportation; and
Figures 2(A) to (F) illustrate the steps of a covering system constructed in accordance with the invention whereby the container covered is removable from the vehicle.

### Detailed Description of Preferred Embodiments

The present system can employed to cover containers located on a vehicle for transportation and for containers that are to be removed from the vehicle for ground storage.

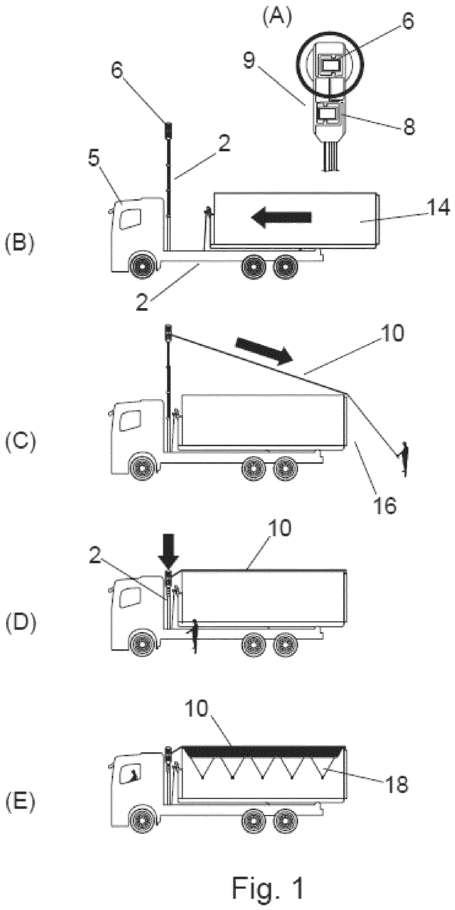

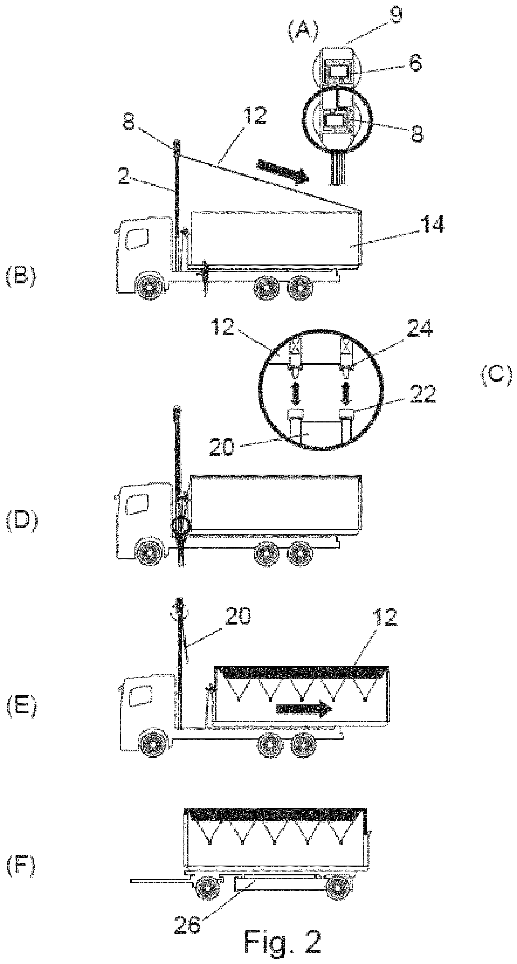

The system shown in both figures 1 and 2 comprises a telescopic frame or tower 2 mounted on, and aligned vertical to, a vehicle body 4 next to and behind the cabin 5 of the vehicle.

In the stored, unused, position the frame 2 stands in its retracted state and is extended to its full height for use. In it stored positon the height of the frame 2 is approximately the height of a container 14.

The top end of the frame 2 carries first and second vertically aligned rotatable spools or rollers 6, 8 as can be seen in figures 1(A) and 2(A). The spools 6, 8 are housed in a single housing unit 9 located or near to the top of the frame 2.

As will be described later, each spool 6, 8 holds a cover sheet and one of the spools 6 provides for permanent attachment of its associated cover 10. The other spool 8 is designed to allow detachment of its associated cover 12. Selection of which spool to operate is determined by whether it is the intention to remove the container 14 from the vehicle 2 once or after it is covered.

In use, a container 14 which requires covering is placed onto the vehicle body 4. As can be seen in the figures, once the container 14 is in position, the frame 2 sits at one end of the container 14 between that end and the vehicle cabin 5. The installation therefore utilises the pre-existing gap between the container 14 and the cabin 5 and is consequently suitable for use within the current length restrictions of trucks and trailers.

Figure 1 illustrates the system being used in the case where a container 14 is placed onto the vehicle 14 and requires a cover 10 for its subsequent transportation, during which time it remains on the vehicle body 4.

In such a scenario the first spool 6 is operated. This is illustrated by the circle on figure 1(A) The spool 6 is located and aligned above the second spool 8. The spool 6 carries a first cover sheet 10 made, for example from tarpaulin or any other suitable hard-wearing, waterproof sheet material. One end of the cover 10 is permanently attached to the spool 6.

In use, the frame 2 is extended to its full height and the upper spool 6 is operated to pull the cover 10 over the container 14 using, for example, a rope assisted by a spring mechanism or motor, as can be seen in figure 1(C).

The distal edge of the cover 10 is then secured to the back-end 16 of the container 14.

Once secured at that end, the frame 2 is retracted downwardly to approximately the height of the container 14 to pull and tighten the cover 10 over the top of the container 14, as can be seen in figure 1(C).

The cover 10 remains secured to the frame 2 and the retracted bias of the spool 6 maintains the cover 10 taught over the container 14 during transportation. The cover 10 is also secured over the sides of the container 14 using side flaps 18 attached with clips or using other standard means such as a rope threaded through eyelets.

To remove the cover 10, the side flaps 18 are released, the height of the frame 2 is extended and the cover 10 is retracted back around the spool 6 once the ends have been unclipped from the container 14.

Figure 2 illustrates the system being used in the situation where the container 14, once covered is to be removed from the vehicle 2 for storage, during which time the container 14 remains securely covered.

In such a scenario the second spool 8 is operated. This is illustrated by the circle on figure 2(A). The spool 8 is located and aligned below the first spool 6. The spool 8 carries a first sheet section 20 also made, for example, from tarpaulin. One end of the sheet section 20 is permanently attached to the spool 8. The distal end of the sheet section 20 has clips 22 to connect to complimentary clips 24 located at one end of the second cover 12 (see figure 2(C)).

As with the first scenario of figure 1, in use, the frame 2 is extended to its full height and the spool 8 is operated to pull the cover 12 over the container 14 using, for example, a rope assisted by a spring mechanism or motor, as can be seen in figure 1(B).

The distal edge of the cover 12 is then secured to the back-end 16 of the container 14.

At this point, the end of the cover 12 is disconnected from the sheet section 20 by unclipping the clips 22, 24 to allow the end of the cover 12 to be secured to the container 14. The cover 12 may be secured to the container 14 by any appropriate means, for example by clipping rubber cords on to the cover clips 24 and securing the cords to rope hooks provided on the container 14.

The sheet section 20 is then retracted back around the spool 20.

As previously described, the side flaps 18 are then secured to the container 14. As the container 14 is no longer connected to the frame 2, the container 14 can now be removed from the vehicle 4 for storage. The cover 12 remains securely in place throughout this process, and subsequently while the container 12 stays in storage.

The frame 2 is then retracted to its lowest height for storage purposes.

Figure 2(F) illustrates the container 14 located on a trailer 26.

The container 14 may be placed back on to the vehicle body 4 at any time while still covered and can be connected back to the frame 2 by un-securing the end of the cover 12 from the container 14 and connecting the cover 12 back to the sheet section 20 thereby allowing removal of the cover at the appropriate time.

The system allows for multiple covers to be attached to the spool 6 and for covers of different lengths of different material to be used.

## Claims

1. A covering system for a container transported on a vehicle, the system comprising a frame mounted on the vehicle, the distal end of the frame including a spool having a sheet section retractable around and/or extendible from the spool, the sheet section including at its distal end means to attach a cover sheet for employment over a container located on the vehicle body, wherein the cover is detachable from the sheet section once the sheet is deployed over the container for securement to the container to allow the container to be removed from the vehicle whilst covered.

2. A covering system according to claim 1 wherein the cover sheet is connectable to the sheet section through one or more clips.

3. A covering system according to claim 1 or claim 2, wherein the frame is telescopic.

4. A covering system according to any one of claims 1 to 3, wherein the frame carries two vertically aligned spools.

5. A covering system according to claim 4, wherein one spool has permanently connected cover sheet connected thereto for deployment over a container located on the vehicle body when selected to do so by the user.

6. A system according to any one of claims 1 to 5, wherein the cover sheet is made from tarpaulin.

7. A system according to claim 5 or 6, wherein the sheet section is made from tarpaulin.

8. A method of covering a container on a vehicle and subsequently removing the covered container from the vehicle, wherein the cover is connected to a sheet section carried on a spool located on a frame upstanding from the vehicle body, the method comprising the steps of:
extending the cover over and across the uncovered container;
securing the distal end of the cover to the corresponding end of the container;
disconnecting the other end of the cover from the sheet section;
securing the end of the cover to the end container; and
removing the covered container from the vehicle.
